# EUROPÄISCHE PATENTSCHRIFT

(11) **EP 2 288 634 B1**
(45) Veröffentlichungstag und Bekanntmachung des Hinweises auf die Patenterteilung: **26.10.2011**
(21) Anmeldenummer: 09765775.3
(22) Anmeldetag: 10.06.2009
(51) Int. Cl.: C08F 283/12, C08F 290/14, C08F 292/00, C09D 151/08, C09D 151/10

(54) **NANOPARTIKULÄRE SILIKONORGANOCOPOLYMERE UND DEREN VERWENDUNG IN BESCHICHTUNGSMITTELN**
NANOPARTICULATE SILICONE ORGANO COPOLYMERS AND USE THEREOF IN COATING MEANS
COPOLYMÈRES D'ORGANOSILICONE NANOPARTICULAIRES ET LEUR UTILISATION DANS DES AGENTS DE REVÊTEMENT

(30) Priorität: 20.06.2008 DE 102008002570
(43) Veröffentlichungstag der Anmeldung: 02.03.2011
(73) Patentinhaber: Wacker Chemie AG, 81737 München (DE)
(72) Erfinder: MINGE, Oliver, 80337 München (DE); HAUSBERGER, Albert, 83361 Kienberg (DE)
(74) Vertreter: Schuderer, Michael
(86) Internationale Anmeldenummer: PCT/EP2009/057137
(87) Internationale Veröffentlichungsnummer: WO 2009/153195

(56) Entgegenhaltungen:
- DE-A1- 10 301 976
- DE-A1-102005 000 824
- DE-A1-102006 054 158
- US-A- 5 188 899

## Beschreibung

Die Erfindung betrifft nanopartikuläre Silikonorganocopolymere in Form von deren wässrigen Dispersionen oder in Wasser redispergierbaren Pulver, Verfahren zu deren Herstellung sowie deren Verwendung in Beschichtungsmitteln, insbesondere zur Herstellung von Wärmedämmverbundsystemen.

Wärmedämmverbundsysteme (WDVS) haben für das Dämmen von Gebäuden, insbesondere von Gebäudeaußenwänden große Bedeutung. WDVS umfassen üblicherweise Dämmmaterial, Putzschichten sowie eine Beschichtung mit einem Beschichtungsmittel, beispielsweise einen Farbanstrich. Gängige Dämmmaterialien sind Glaswolle oder Platten auf Basis von Polystyrol. Untergründe für WDVS sind beispielsweise Ziegel, Kalksandstein oder Beton. Auf das Dämmmaterial können Putzschichten aufgebracht werden, üblicherweise auf Mörtelbasis. Als weitere, in der Regel als oberste Schicht enthält die WDVS eine Beschichtung mit einem Beschichtungsmittel. Den gesamten Verbund aus Gebäudeoberfläche und WDVS bezeichnet man auch als Wärmedämmverbundfassade. Durch WDVS wird der Wärmeverlust von Gebäuden verringert. Die dämmenden Eigenschaften von WDVS beruhen wesentlich darauf, dass das WDVS mindestens eine Komponente mit einer schlechten Wärmeleitfähigkeit enthält, wie beispielsweise Luftporen enthaltende Komponenten.

Vielfach entstehen in WDVS Schäden durch Tauwasser. Tauwasser kann im WDVS auftreten, wenn das WDVS durch die Umgebungsluft so stark abgekühlt wird, dass der Taupunkt der beispielsweise in den Luftporen des WDVS befindlichen Luft erreicht bzw. unterschritten wird und folglich Wasser auskondensiert. Das Auftreten von Tauwasser bereitet insbesondere in kalten Jahreszeiten Probleme auf, wenn die beispielsweise durch Sonneneinstrahlung in das WDVS eingetragene Wärme nicht mehr ausreicht, um das im WDVS entstandene Tauwasser zu verdunsten und schließlich aus dem WDVS freizusetzen.

Das Tauwasser führt zur Verwitterung des WDVS, wie beispielsweise zur Durchfeuchtung des Dämmstoffs, Algenbewuchs oder Abplatzen von Komponenten des WDVS in Folge gefrierenden Tauwassers, so dass das WDVS in seinem Wärmedämmvermögen eingeschränkt und schließlich so beschädigt wird, dass es saniert oder vollständig erneuert werden muss.

Wichtig es daher, die WDVS so auszugestalten, dass ein Ansammeln von Tauwasser im WDVS oder ein Eindringen von Wasser aus der Umgebung in das WDVS verhindert wird.

Um das Eindringen von Wasser in Außenfassaden oder WDVS zu unterbinden, werden Beschichtungsmittel bisher häufig mit Organosiliziumverbindungen als hydrophobierendem Zusatz modifiziert. So empfiehlt die EP-A 0791566 Beschichtungsmittel auf Basis von Alkoxysilanen und gegebenenfalls alkoxyfunktionellen Organopolysiloxanen zur Hydrophobierung von mineralischen Baustoffen. Die DE-A 1076946 lehrt den Einsatz von Organopolysiloxanen auf Basis von Alkylalkoxysilanen und Ethylenglykol als Additive zur Hydrophobierung von porösen Baustoffen. Beispiele sind auch Silikonharzfarben oder mit Silikonen modifizierte Silikat- oder Dispersionsfarben. Die Applikation derartig modifizierter Beschichtungsmittel führt zu beschichteten Baustoffen, deren Oberfläche sowie auch deren mit der Oberfläche verbundenen Kapillaren hydrophobiert sind. Entsprechend hergestellte WDVS sind somit oberflächenhydrophob und kapillarhydrophob mit der Folge, dass beispielsweise im WDVS in Form von Wasserdampf entstandenes Tauwasser von der hydrophobierten Beschichtung abgestoßen wird und sich in Form von Wassertropfen im WDVS ansammelt. Wassertropfen haben im Vergleich zu dünnen Wasserfilmen eine geringe Oberfläche und verdunsten dementsprechend langsamer.

Darüberhinaus erzeugen kapillarhydrophobe Beschichtungen einen hohen Diffusionswiderstand für Wasserdampf, so dass die Freisetzung von Tauwasser aus entsprechend hydrophobierten WDVS erschwert wird. Vorteilhaft wäre es dagegen im Falle von WDVS, dass der Diffusionswiderstand für Wasserdampf zur Luftseite des WDVS hin abnimmt, um ein Entweichen von Wasserdampf aus dem WDVS zu erleichtern.

Die EP-A 1833867 beschreibt beispielsweise die Verwendung von Copolymerisaten auf Basis von ethylenisch ungesättigten Monomeren und ethylenisch funktionalisierten Nanopartikeln als Beschichtungsmittel für Baustoffe. Die damit erhältlichen Beschichtungen sind aber noch nicht ausreichend mit Wasser benetzbar. Zudem sind die darin beschriebenen Copolymerisate nicht hochtransparent, was in vielen Anwendungsbereichen eine wichtige Anforderung an Beschichtungsmittel darstellt.

Vor diesem Hintergrund bestand die Aufgabe, transparente Polymere bereitzustellen, deren Einsatz in Beschichtungsmitteln Beschichtungen zugänglich macht, die so hydrophob sind, dass ein Eindringen von Wasser in die Beschichtungen unterbunden wird, und die zugleich so hydrophil sind, dass die Beschichtungen durch Wasser benetzbar sind.

Überraschenderweise werden mit nanopartikulären Silikonorganocopolymeren, die Einheiten von linearen Polydiorganosiloxanen enthalten, Beschichtungsmittel zugänglich, die gleichzeitig die gegensätzlichen Eigenschaften der Hydrophilie und Hydrophobie in der Weise vereinen, die zur Lösung der erfindungsgemäßen Aufgabe erforderlich ist.

Gegenstand der Erfindung sind nanopartikuläre Silikonorganocopolymere in Form von deren wässrigen Polymerdispersionen oder in Wasser redispergierbaren Polymerpulvern, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von ≤ 1000 nm, welches mit ethylenisch ungesättigten, radikalisch polymerisierbaren Gruppen funktionalisiert ist, wobei B1) als Partikel P ein oder mehrere aus der Gruppe der Metalloxide und Halbmetalloxide eingesetzt werden, und/oder B2) als Partikel P Silikonharze der allgemeinen Formel [R⁴_{(p+z)}SiO_{(4-p-z)/2}]ₘ (II) eingesetzt werden, wobei die einzelnen Reste R⁴ jeweils unabhängig voneinander für Wasserstoff-, Hydroxy-, sowie Alkyl-, Cycloalkyl-, Aryl-, Alkoxy- oder Aryloxyreste mit jeweils bis zu 18 C-Atomen stehen, welche gegebenenfalls substituiert sein können,
   wobei m für eine ganzzahlige Zahl ≥ 30 steht, und wobei für mindestens 20 Mol-% des jeweiligen Silikonharzes p + z = 0, 1 oder 3 beträgt, dadurch gekennzeichnet, dass C) ein oder mehrere lineare Polydiorganosiloxane der allgemeinen Formel R⁹₃SiO-[R⁸₂SiO_{2/2}]ₙ-SiR⁹₃ (III) copolymerisiert werden, wobei die einzelnen Reste R⁸ und R⁹ jeweils unabhängig voneinander für Hydroxy-, Alkyl-, Cycloalkyl-, Aryl-, Alkoxy- oder Aryloxyreste mit jeweils bis zu 18 C-Atomen stehen, welche gegebenenfalls substituiert sein können,
   wobei mindestens einer der Reste R⁹ für einen Hydroxy-, Alkoxy-oder Aryloxyrest steht, und
   n eine ganzzahlige Zahl ≤ 100 bedeutet, und
   wobei B1), B2) und C) jeweils mit einem oder mehreren α-Organosilanen der allgemeinen Formel (R¹O)₃₋ₖ(R²)ₖSi-(CR³₂)-X (I) funktionalisiert werden,
   wobei R¹ für Wasserstoff, einen Alkylrest mit 1 bis 6 Kohlenstoffatomen oder einen Arylrest steht, R² und R³ jeweils unabhängig voneinander für Wasserstoff, einen Alkylrest mit 1 bis 12 Kohlenstoffatomen oder einen Arylrest stehen, k die Werte 0, 1 oder 2 bedeuten kann, und X ein Acryl- oder Methacrylrest ist.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomere aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, isoButylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Als Vinylaromaten bevorzugt sind Styrol, alpha-Methylstyrol, die isomeren Vinyltoluole und Vinylxylole sowie Divinylbenzole. Besonders bevorzugt ist Styrol.

Unter den Vinylhalogenverbindungen sind Vinylchlorid, Vinylidenchlorid, ferner Tetrafluorethylen, Difluorethylen, Hexylperfluorethylen, 3,3,3-Trifluorpropen, Perfluorpropylvinylether, Hexafluorpropylen, Chlortrifluorethylen und Vinylfluorid zu nennen. Besonders bevorzugt ist Vinylchlorid.

Ein bevorzugter Vinylether ist beispielsweise Methylvinylether.

Die bevorzugten Olefine sind Ethen, Propen, 1-Alkylethene sowie mehrfach ungesättigte Alkene, und die bevorzugten Diene sind 1,3-Butadien und Isopren. Besonders bevorzugt sind Ethen und 1, 3-Butadien.

Als Monomere A) können gegebenenfalls ein oder mehrere ethylenisch ungesättigte Mono- oder Dicarbonsäuren, ethylenisch ungesättigte Sulfonsäuren oder deren Salze copolymerisiert werden, vorzugsweise zu 0,1 bis 5 Gew.-%, bezogen auf das Gesamtgewicht der Monomere A). Bevorzugte Mono- oder Dicarbonsäuren sind Acrylsäure, Methacrylsäure, Fumarsäure, Maleinsäure. Bevorzugte Sulfonsäuren sind Vinylsulfonsäure, 2-Acrylamido-2-methyl-propansulfonsäure. Der Einsatz der ethylenisch ungesättigten Mono- oder Dicarbonsäuren bzw. Sulfonsäuren führt zu einer Stabilisierung wässriger Dispersionen oder Redispersionen von Polymerpulvern der nanopartikulären Silikonorganocopolymere. Gegebenenfalls können noch 0,1 bis 5 Gew.-%, bezogen auf das Gesamtgewicht der Monomere A), Hilfsmonomere copolymerisiert werden. Bevorzugt werden 0,5 bis 2,5 Gew.-% Hilfsmonomere eingesetzt. Beispiele für Hilfsmonomere sind ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Besonders bevorzugt werden als Monomere A) ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol, 1,3-Butadien. Besonders bevorzugt werden als Monomere A) auch Gemische von Vinylacetat und Ethylen; Gemische von Vinylacetat, Ethylen und einem Vinylester von α-verzweigten Monocarbonsäuren mit 9 bis 11 C-Atomen; Gemische von n-Butylacrylat und 2-Ethylhexylacrylat und/oder Methylmethacrylat; Gemische von Styrol und einem oder mehreren Monomeren aus der Gruppe Methylacrylat, Ethylacrylat, Propylacrylat, n-Butylacrylat, 2-Ethylhexylacrylat; Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; Gemische von 1,3-Butadien und Styrol und/oder Methylmethacrylat; wobei die genannten Gemische gegebenenfalls noch ein oder mehrere der oben genannten ethylenisch ungesättigten Mono- oder Dicarbonsäuren, ethylenisch ungesättigten Sulfonsäuren oder deren Salze oder Hilfsmonomere enthalten können.

Die Monomerauswahl bzw. die Auswahl der Gewichtsanteile der Monomere erfolgt dabei so, daß im allgemeinen eine Glasübergangstemperatur Tg von ≤ 60°C, vorzugsweise -50°C bis +60°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Der Anteil der Monomere A) beträgt vorzugsweise ≥ 50 Gew.-%, besonders bevorzugt 70 bis 92 Gew.-%, jeweils bezogen auf das Gesamtgewicht der Komponenten A), B) und C) zur Herstellung der nanopartikulären Silikonorganocopolymere.

Geeignete Partikel P sind aus der Gruppe B1) Siliziumoxide und Metalloxide. Bei den Metalloxiden sind die Oxide der Metalle Aluminium, Titan, Zirkonium, Tantal, Wolfram, Hafnium, Zink und Zinn bevorzugt. Bei den Siliziumoxiden werden kolloidale Kieselsäure, pyrogene Kieselsäure, gefällte Kieselsäure, Kieselsole besonders bevorzugt. Bei den Metalloxiden sind Aluminiumoxide wie Korund, Aluminiummischoxide mit anderen Metallen und/oder Silizium, Titanoxide, Zirkonoxide, Eisenoxide besonders bevorzugt.

Bevorzugte Partikel P aus der Gruppe der Silikonharze sind solche, die sich zu mindestens 30 Mol-% aus Q-Einheiten aufbauen, das heißt für die p+z in der Wiederholungseinheit [R⁴_{(p+z)}SiO_{(4-p- z)/2}] der allgemeinen Formel (II) die Bedeutung 0 hat. Besonders bevorzugte Silikonharze sind solche, die nur aus M- und Q-Einheiten aufgebaut sind, das heißt für die p+z in der Wiederholungseinheit [R⁴_{(p+z)}SiO_{(4-p-z)/2}] der allgemeinen Formel (II) nur die Bedeutung 0 und 3 hat. Falls die Reste R⁴ substituiert sind, so können diese zusätzlich eines oder mehrere gleiche oder verschiedene Heteroatome ausgewählt aus O-, S-, Si-, Cl-, F-, Br-, P- oder N-Atomen enthalten. Darüber hinaus sind auch solche Silikonharze geeignet, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T- und/oder Q-Einheiten enthalten sind und ihr Anteil an den Einheiten, die das Silikonharz aufbauen, in Summe mindestens 20 Mol-% beträgt und bei Vorlage jeweils nur einer dieser Einheiten ihr Anteil jeweils mindestens 20 Mol-% ist.

Am meisten bevorzugte Silikonharze B2) sind solche, die sich im Wesentlichen nur aus M und Q Einheiten aufbauen, wobei das MolVerhältnis von M/Q-Einheiten von 30/70 bis 60/40 reicht, insbesondere bevorzugt sind Harze mit einem M/Q-Verhältnis von 35/65 bis 45/55. Weiterhin am meisten bevorzugte Harze sind solche, die zum überwiegenden Teil aus T-Einheiten bestehen, insbesondere solche die zu > 80 Mol-% aus T-Einheiten bestehen, ganz besonders solche die zu praktisch 100 Mol-% aus T-Einheiten bestehen.

m nimmt in der allgemeinen Formel (II) vorzugsweise Werte an von 30 bis 100, besonders bevorzugt von 30 bis 70 und am meisten bevorzugt von 30 bis 50.

Die Partikel P besitzen bevorzugt einen mittleren Durchmesser von 1 bis 1000 nm, besonders bevorzugt 1 bis 100 nm, wobei die Teilchengröße durch Transmissionselektronenmikroskopie der erhaltenen Dispersionen oder der aus den Dispersionen erhältlichen Filme bestimmt wird.

Unter α-Organosilane sind solche Silane zu verstehen, bei denen das Alkoxy-, Aryloxy- oder OH-substituierte Siliziumatom, direkt über eine Methylenbrücke mit einem ungesättigten Kohlenwasserstoffrest verbunden ist, wobei die Wasserstoffreste der Methylenbrücke auch durch Alkyl- und/oder Arylreste ersetzt sein können .

Geeignete α-Organosilane der Formel (R¹O)₃₋ₖ(R²)ₖSi-(CR³₂)-X (I) sind auch solche in denen die Kohlenstoffkette der Reste R¹, R² und R³ durch nicht benachbarte Sauerstoff-, Schwefel-, oder NR⁴-Gruppen unterbrochen sind. Bevorzugt sind als Reste R¹ und R² unsubstituierte Alkylgruppen mit 1 bis 6 C-Atomen und als Rest R³ Wasserstoff Neben der Doppelbindung können auch weitere funktionelle Gruppen vorhanden sein, die in der Regel gegenüber einer olefinischen Polymerisation inert sind, beispielsweise Halogen-, Carboxy-, Sulfinato-, Sulfonato-, Amino-, Azido-, Nitro-, Epoxy-, Alkohol-, Ether-, Ester-, Thioether- und Thioester-Gruppen sowie aromatische iso- und heterocyclische Gruppen. Der Rest X ist ein Acryl- oder Methacrylrest.

Es wird darauf hingewiesen, dass auch Komponenten B) geeignet sind, welche neben der Funktionalisierung mit α-Organosilanen mit γ-Organosilanen (Siliziumatom ist über eine Propylenbrücke mit einem ungesättigten Kohlenwasserstoffrest verbunden) oder Vinylorganosilanen H₂C=CH-SiX₃ (mit X=Alkyl- oder Alkoxyrest, jeweils unabhängig voneinander) funktionalisiert sind.

Der Anteil der Komponente B) beträgt 0,5 bis 49,9 Gew.-%, vorzugsweise 1 bis 30 Gew.-%, besonders bevorzugt 4 bis 20 Gew.-%, jeweils bezogen auf das Gesamtgewicht der Komponenten A), B) und C) zur Herstellung der nanopartikulären Silikonorganocopolymere.

Beispiele für bevorzugte lineare Polydiorganosiloxane C) sind lineare monofunktionelle Silikonöle der allgemeinen Formel R⁹₃SiO-[R⁸₂SiO_{2/2}]ₙ-SiR⁹₃ (III), in denen die Reste R⁸ jeweils über ein Kohlenstoffatom an das jeweilige Siliziumatom der Siloxankette gebunden sind, und eines der beiden terminalen Siliziumatome der Siloxankette drei über ein Kohlenstoffatom gebundene Reste R⁹ aufweist und das andere terminale Siliziumatom zwei über ein Kohlenstoffatom gebundene Reste R⁹ und einen über ein Sauerstoffatom gebundenen Rest R⁹ aufweist, bei dem es sich um einen Hydroxy-, Alkoxy- oder ein Aryloxyrest handelt, der zur Reaktion mit einem α-Organosilan der allgemeinen Formel (R¹O)_{3- k}(R²)ₖSi-(CR³₂)-X (I), wie oben beschrieben, befähigt ist.

Für die Funktionalisierung der linearen Polydiorganosiloxane C) sind dieselben α-Organosilane geeignet oder bevorzugt, die für die Komponente B) entsprechend aufgeführt sind.

In der Formel III nimmt n vorzugsweise ganzzahlige Werte von 1 bis 40, besonders bevorzugt von 1 bis 25 und am meisten bevorzugt 1 bis 10 an.

In der Formel III steht der Rest R⁸ vorzugsweise für Methyl, Phenyl oder Wasserstoff, besonders bevorzugt für Methyl. Die Reste R⁹ werden vorzugsweise ausgewählt aus der Gruppe umfassend Methyl, Phenyl, Wasserstoff, Methyloxy, Phenyloxy und Hydroxy; und besonders bevorzugt aus der Gruppe umfassend Methyl und Methyloxy.

Beispiele für bevorzugte Polydiorganosiloxane C), die mit α-Organosilanen funktionalisiert sind, sind α-Methacryloxymethylpolydimethylsiloxan und α-Methacryloxypropylpolydimethylsiloxan mit Werten n von vorzugsweise 1 bis 60, besonders bevorzugt von 1 bis 40, am meisten bevorzugt von 1 bis 20 (bestimmt mittels ¹H-NMR-Spektroskopie).

Der Anteil der Polydiorganosiloxane C) beträgt vorzugsweise 0,1 bis 10 Gew.-%, besonders bevorzugt 0,1 bis 7 Gew.-%, am meisten bevorzugt 0,1 bis 5 Gew.-%, jeweils bezogen auf das Gesamtgewicht der Komponenten A), B) und C) zur Herstellung der nanopartikulären Silikonorganocopolymere.

Neben den Komponenten A), B) und C) können die nanopartikulären Silikonorganocopolymere noch bis zu 30 Gew.-%, bezogen auf das Gesamtgewicht der Komponenten A), B) und C), mindestens eines Silans der allgemeinen Formel (R⁵)₄₋ⱼ-Si-(OR⁶)ⱼ (IV) enthalten sein, wobei j eine Zahl im Wert von 1, 2, 3 oder 4 bedeutet, R⁵ ein organofunktioneller Rest ist, ausgewählt aus der Gruppe Alkoxyrest und Aryloxyrest mit jeweils 1 bis 12 C-Atomen, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest R⁵ unmittelbar am Siliziumatom gebunden sein kann oder durch eine Kohlenstoffkette von 1 bis 6 C-Atomen davon getrennt sein kann und R⁶ einen einwertigen lineraren oder verzweigten aliphatischen oder cycloaliphatischen Kohlenwasserstoffrest oder einen einwertigen aromatischen Kohlenwasserstoffrest mit jeweils 1 bis 12 C-Atomen, oder einen Rest -C(=O)-R⁷ bedeutet, wobei R⁷ einen einwertigen linearen oder verzweigten aliphatischen oder einen cycloaliphatischen Kohlenwasserstoffrest mit jeweils 1 bis 12 C-Atomen oder einen einwertigen aromatischen Kohlenwasserstoffrest bedeutet. Das ausgewählte Silan oder gegebenenfalls die ausgewählten Silane können in nicht hydrolysierter Form, in hydrolysierter Form oder in hydrolysierter und teilkondensierter oder hydrolysierter und kondensierter Form oder in einem Gemisch dieser Formen vorliegen.

Der mittlere Durchmesser der Partikeldomänen innerhalb der nanopartikulären Silikonorganocopolymere liegt vorzugsweise im Bereich von 1 nm bis 1000 nm, insbesondere von 1 nm bis 500 nm und ganz besonders bevorzugt von 1 nm bis 200 nm. Die mittleren Durchmesser lassen sich beispielsweise durch Rasterelektronenmikroskopie oder Transmissionselektronenmikroskopie an Hand von wässrigen Dispersionen oder Polymerfilme der nanopartikulären Silikonorganocopolymere bestimmen.

Weiterhin können im Fall der Miniemulsionspolymerisation gegebenenfalls noch hydrophobe Zusätze in Mengen von bis 3 Gew.-% vorhanden sein (sogenannte "Co-Tenside", "Hydrophobe"), bezogen auf das Gesamtgewicht der Komponenten A), B)und C). Im vorliegenden Fall können Silikonpartikel oftmals die Funktion des "Co-Tensids" übernehmen. Weitere Beispiele für Co-Tenside sind Hexadekan, Cetylalkohol, Paraffin, oligomere Cyclosiloxane, wie z.B. Octamethylcyclotetrasiloxan, aber auch pflanzliche Öle wie Rapsöl, Sonnenblumenöl oder Olivenöl. Weiterhin geeignet sind organische oder anorganische Polymere mit einem zahlenmittleren Molekulargewicht von < 10000. Erfindungsgemäß bevorzugte Hydrophobe sind die zu polymerisierenden Silikonpartikel selbst, sowie D3-, D4- und D5-Zyklen und Hexadekan. Besonders bevorzugt sind die zu polymerisierenden Silikonpartikel, Paraffin und Hexadekan.

Die Herstellung der Copolymerisate erfolgt in einem Heterophasenprozess nach den bekannten Techniken der Suspensions-, Emulsions- oder Miniemulsionspolymerisation (vgl. z.B. Peter A. Lovell, M.S. EI-Aasser, "Emulsion Polymerization and Emulsion Polymers" 1997, John Wiley and Sons, Chichester). In einer besonders bevorzugten Form wird die Reaktion nach der Methodik der Miniemulsionspolymerisation durchgeführt. Miniemulsionspolymerisationen unterscheiden sich in einigen wesentlichen Punkten, die sie für die Copolymerisation wasserunlöslicher Monomere besonders geeignet machen von anderen Heterophasenpolymerisationen (vgl. z.B. K. Landfester, "Polyreactions in Miniemulsions", Macromol. Rapid. Commun. 2001, 22, 896-936 und M.S. El-Aasser, E.D. Sudol, "Miniemulsions: Overview of Research and Applications" 2004, JCT Research, 1, 20-31).

Die Reaktionstemperaturen liegen von 0°C bis 100°C, bevorzugt von 5°C bis 80°C, besonders bevorzugt von 30°C bis 70°C. Der pH-Wert des Dispergiermediums liegt zwischen 2 und 9, bevorzugt zwischen 4 und 8. In einer besonders bevorzugten Ausführungsform zwischen 6,5 und 7,5. Die Einstellung des pH-Wertes vor Beginn der Reaktion kann durch Salzsäure oder Natronlauge erfolgen. Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

Die Initiierung der Polymerisation erfolgt mittels der üblichen wasserlöslichen Initiatoren oder Redox-Initiator-Kombinationen. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid und Azobisisobutyronitril. Die genannten Initiatoren werden vorzugsweise in Mengen von 0,01 bis 4,0 Gew.-%, bezogen auf das Gesamtgewicht der Monomeren, eingesetzt. Als Redox-Initiator-Kombinationen verwendet man oben genannte Initiatoren in Verbindung mit einem Reduktionsmittel. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt vorzugsweise 0,15 bis 3 Gew.-% der eingesetzten Monomermenge. Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Ein besonders bevorzugtes Initiator-System aus den vorangenannten Komponenten ist das System t-Butylhydroperoxid/- Natriumhydroxymethansulfinat/Fe (EDTA)^{2+/3+}.

Im Falle der Reaktionsführung nach der Miniemulsionspolymerisationsmethodik können auch überwiegend öllösliche Initiatoren verwendet werden, etwa Cumolhydroperoxid, Isopropylbenzolmonohydroperoxid, Dibenzoylperoxid oder Azobisisobutyronitril. Bevorzugte Starter für Miniemulsionspolymerisationen sind Kaliumpersulfat, Ammoniumpersulfat, Azobisisobutyronitril sowie Dibenzoylperoxid.

Zur Herstellung der nanopartikulären Silikonorganocopolymere in Form von in Wasser redispergierbaren Polymerpulvern werden die wässrigen Dispersionen der nanopartikulären Silikonorganocopolymere in dem Fachmann bekannter Weise getrocknet, vorzugsweise nach dem Sprühtrocknungsverfahren.

Ein weiterer Gegenstand der Erfindung sind Beschichtungsmittel enthaltend ein oder mehrere erfindungsgemäße nanopartikuläre Silikonorganocopolymere sowie gegebenenfalls ein oder mehrere Hilfsstoffe und gegebenenfalls ein oder mehrere Zusatzstoffe.

Beispiele für Hilfsstoffe sind Tenside, wobei sowohl anionische Tenside, als auch nichtionische Tenside, oder kationische Tenside, oder ampholytische Tenside geeignet sind. Weitere Hilfsstoffe sind auch Pigmente, beispielsweise Erdpigmente, wie Kreide, Ocker, Umbra, Grünerde, Mineralpigmente, wie Titandioxid, Chromgelb, Mennige, Zinkgelb, Zinkgrün, Cadmiumrot, Kobaltblau, organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente.

Zusatzstoffe sind beispielsweise Biozide, Verdicker, Alkylorthotitanate, Alkylborsäureester, Pigmentnetz- und Dispergiermittel, Antischaummittel, Korrosionsschutzpigmente, Metalloxide, Metallcarbonate oder organische Harze.

Die Beschichtungsmittel enthalten vorzugsweise 1 bis 90 Gew.-%, besonders bevorzugt 4 bis 70 Gew.-% der nanopartikulären Silikonorganocopolymerdispersionen; vorzugsweise 0,1 bis 10 Gew.-%, besonders bevorzugt 0,5 bis 5 Gew.-% Tenside; vorzugsweise 0,5 bis 40 Gew.-%, besonders bevorzugt 2 bis 35 Gew.-%, am meisten bevorzugt 5 bis 30 Gew.-% Pigmente; vorzugsweise 0,1 bis 60 Gew.-%, besonders bevorzugt 1 bis 50 Gew.-%, am meisten bevorzugt 10 bis 40 Gew.-% Zusatzstoffe; vorzugsweise 10 bis 70 Gew.-%, besonders bevorzugt 15 bis 65 Gew.-%, am meisten bevorzugt 20 bis 60 Gew.-% Wasser. Die Anteile in Gew.-% sind dabei jeweils auf das Gesamtgewicht des jeweiligen Beschichtungsmittels bezogen.

Zur Herstellung der Beschichtungsmittel können deren einzelnen Komponenten in beliebiger Weise in den hierfür gängigen Vorrichtungen gemischt werden. Vorzugsweise werden die nanopartikulären Silikonorganocopolymere in Form von Pulvern dem Mahlgut zugegeben, wie es typisch für Silikonharzbindemittel ist, oder in Form von Dispersionen während der Applikation der Beschichtungsmittel zugesetzt.

Vorzugsweise werden die Beschichtungsmittel als Farben, beispielsweise für die Anwendung am Gebäude innen oder vorzugsweise außen, oder auch als Beschichtungsmittel für Verandas oder Terassen eingesetzt.

Die Beschichtungsmittel können aber auch für die Beschichtung von unverbauten Baustoffen, wie Ziegeln, Kalksandsteinen oder Betonsteinen, eingesetzt werden.

Farben enthaltend die erfindungsgemäßen Beschichtungsmittel können über- oder unterkritisch formuliert sein. Bevorzugt ist eine überkritische Formulierung, also Farben mit einer Pigmentvolumenkonzentration (PVK) von > 60%. Die Definition der Pigmentvolumenkonzentration ist dem Fachmann beispielsweise aus Ullmanns Enzyklopädie der technischen Chemie, 4. Auflage, Band 15, Seite 668 bekannt.

Ein weiterer Gegenstand der Erfindung sind Wärmedämmverbundsysteme (WDVS) enthaltend Dämmmaterial und eine oder mehrere Beschichtungen, dadurch gekennzeichnet, dass zur Herstellung mindestens einer der Beschichtungen ein Beschichtungsmittel enthaltend ein oder mehrere erfindungsgemäße nanopartikuläre Silikonorganocopolymere eingesetzt wurde.

Geeignete Dämmmaterialien sind beispielsweise anorganische Materialien, wie Mineralwolle, beispielsweise Stein- oder Glaswolle, Mineralschaum, wie Kalziumsilikat-Hydrate, organische beziehungsweise synthetische Materialien, wie Polystyrol-Hartschaum (PS), Polystyrolpartikel-Schaum (EPS), Polystyrolextruder-Schaum (XPS), Polyurethan-Hartschaum (PUR), Vakuumdämmplatten (VIP), oder auch Naturmaterialien, wie Holzfaser, Kork, Hanf oder Schilf.

Die Beschichtungen können ein oder mehrere Putzschichten umfassen, wie beispielsweise einen Unterputz, der gegebenenfalls ein Gewebe enthält, sowie gegebenenfalls einen Oberputz. Vorzugsweise sind die Putzschichten auf Mörtelbasis.

Die WDVS können nach gängigen Verfahren hergestellt werden und auf allen gängigen Untergründen aufgebracht sein. Üblicherweise wird das Dämmmaterial in Form von Platten oder Lamellen mit Hilfe von Klebern, Schrauben oder Dübeln auf den jeweiligen Untergrund aufgebracht. Gängige Untergründe sind mineralischer Natur, Metalle, Kunststoffe oder natürliche Materialien, wie Holz oder Holz-Kunststoff-Komposite. Bevorzugte Untergründe sind Ziegel, Kalksandstein oder Beton. Auf das Dämmmaterial können ein oder mehrere Putzschichten aufgebracht werden. Das Beschichtungsmittel enthaltend ein oder mehrere erfindungsgemä-βe nanopartikuläre Silikonorganocopolymere wird vorzugsweise als oberste Schicht auf das WDVS aufgebracht. Hierbei handelt es sich bei dem erfindungsgemäßen Beschichtungsmittel besonders bevorzugt um eine Farbe.

Die erfindungsgemäßen WDVS sind insbesondere für außenseitige Gebäudeoberflächen, besonders bevorzugt für Gebäudeaußenwände geeignet.

Vorteilhafterweise ergeben die erfindungsgemäßen Beschichtungsmittel poröse, dampfdurchlässige Beschichtungen, auf deren Oberfläche oder in deren Kapillaren Wasser spreitet und nicht abperlt, wobei die Beschichtungen ausreichend hydrophob sind, um ein Eindringen von flüssigem Wasser von Außen in die Beschichtungen bzw, die WDVS zu unterbinden.

Neben den oben genannten Verwendungen können die erfindungsgemäßen Silikonorganocopolymere auch für die Herstellung von Beschichtungsstoffen oder Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, Formteilen eingesetzt werden. Die erfindungsgemäßen Silikonorganocopolymere können in flüssiger oder in ausgehärteter fester Form in Elastomermassen eingearbeitet werden. Hierbei können sie zum Zwecke der Verstärkung oder zur Verbesserung anderer Gebrauchseigenschaften verwendet werden, wie der Steuerung der Transparenz, der Hitzebeständigkeit, der Vergilbungsneigung, der Bewitterungsbeständigkeit. Die Silikonorganocopolymere können für die genannten Zwecke auch als Reinsubstanz, d.h. ohne weitere Zusätze eingesetzt werden.

Die nanopartikulären Silikonorganocopolymere verfügen über hohe Lagerstabilitäten. Sie verleihen Beschichtungen eine ausgezeichnete Widerstandsfähigkeit, zum Beispiel gegen Bewitterungseinflüsse, Angriff durch chemische Einflüsse und UV Strahlung. Ebenso lassen sich mit diesen Beschichtungen sehr gute Wasserfestigkeit und geringe Verschmutzungsneigung realisieren. Durch das Einpolymerisieren von Silanen, die hydrolysierbare und kondensierbare Gruppen enthalten, in das Silikonorganocopolymer lassen sich Beschichtungsmittel herstellen, die nach dem Auftrag feuchtigkeitshärtend sind, so dass sich die Filmhärten, Thermoplastizität und die Verschmutzungsneigung einstellen lassen.

### Beispiele:

Alle Angaben verstehen sich bei Raumtemperatur und unter Normaldruck, es sei denn es ist anders vermerkt.

### Herstellung eines Methacryl-funktionellen Partikels

### Partikel 1:

Es wurde eine Lösung aus 100 Gewichtsteilen (Gew.-T) eines partikulären Organopolysiloxanharzes (39 % M-Einheiten; 61 % Q-Einheiten; R⁴ gemäß Formel II: Methyl) und 5 Gew.-T des α-Silans Methacrylatomethyl-methyldimethoxysilan in Toluol in Gegenwart von 3 Gew.-T des sauren Katalysators Tonsil^{®} Optimum FF (saures Schichtsilikat; Handelsname der Firma Süd-Chemie) umgesetzt. Nach Abfiltrieren des Katalysators wurde das Lösungsmittel abgedampft.

### Herstellung der nanopartikulären Silikonorganocopolymere:

### Beispiel 1: Polymer 1:

Ein 100 Liter Reaktionskessel mit Mantelkühlung, Siedekühlung und Ankerrührer wurde mit 6560 g Wasser beschickt und einem Gramm eines Fe(II)-EDTA-Komplexes versetzt. Durch zweimaliges Evakuieren und Brechen des Vakuums mit Stickstoff wurde die Apparatur inertisiert.

In einem zweiten Kessel wurde Methacrylsäure, Wasser und Natriumdodecylsulfat in den im folgenden unter Dosierung 1 angegebenen Mengen gelöst (Wasserphase).

In einem dritten Kessel wurden die verbliebenen Komponenten der Dosierung 1 in den angegebenen Mengen homogen gelöst (Ölphase). Anschließend wurde die Ölphase unter gründlichem Rühren in den Kessel mit der Wasserphase eingefüllt. Die so erhaltene Rohemulsion wurde bei einem Druck von 800 bar mit einem Hochdruckhomogenisator der Firma IKA in einem Durchlauf homogenisiert.

Es wurde eine Voremulsion erhalten, die alle Komponenten der Dosierung 1 enthielt. Diese Voremulsion wurde in einem Rührkessel (Voremulsionskessel) bei Raumtemperatur gerührt.

In je einem separaten Kessel wurde die Dosierung 2 bzw. die Dosierung 3 in den im folgenden angegebenen Mengen eingefüllt.

| | |
|---|---|
| Dosierung 1 (alle Angaben in Gramm): | |
| Hexadecan | 131,2 |
| Butylacrylat | 7216 |
| Methylmethacrylat (MMA) | 6560 |
| Butylmethacrylat | 2296 |
| Styrol | 1312 |
| Methacrylsäure | 360,8 |
| Natriumdodecylsulfat | 492 |
| lineares, Monomethacrylatomethyl-funktionelles | |
| PDMS (zahlenmittlere Molmasse: 1200 g/mol) | 918,4 |
| Partikel 1 | 918,4 |
| destilliertes Wasser | 9840 |
| | |
| Dosierung 2 (alle Angaben in Gramm): | |
| Wasser | 1417 |
| tert. Butyl-Hydroperoxid | 157,4 |
| | |
| Dosierung 3 (alle Angaben in Gramm): | |
| Wasser | 1496 |
| Brüggolit^{®} | 78,7 |

Der mit Wasser beschickte Reaktionskessel wurde auf 50°C erwärmt. Die Reaktion wurde durch gleichzeitiges Starten der Dosierungen 1 bis 3 begonnen. Dosierung 1 wurde über einen Zeitraum von drei Stunden in den Reaktionskessel zudosiert, während die Dosierungen 2 und 3 über einen Zeitraum von 200 Minuten dosiert werden. Die Reaktionsmischung wurde dabei durch Mantelkühlung des Reaktionskessels bei einer Temperatur von 50°C gehalten. Nach vollständiger Zugabe der einzelnen Dosierungen wurde noch für 30 Minuten nachgerührt. Anschließend wurde mit einer 10 Gew-% wässrigen Ammoniaklösung der pH-Wert der Dispersion von etwa 3 auf einen pH-Wert von 8,0 gebracht.

Nach Filtration der so erhaltenen Dispersion über einen Siebstrumpf mit einer Maschenweite von 50 Mikrometer wurde eine Dispersion bei einem Festgehalt von 50% und mit einer volumenmittleren Teilchengröße von 90 nm erhalten.

### Beispiel 2: Polymer 2:

Die Herstellung von Polymer 2 erfolgte analog zu Beispiel 1, mit dem Unterschied, dass die "Dosierung 1" folgende Zusammensetzung hatte:

| | |
|---|---|
| Dosierung 1 (alle Angaben in Gramm): | |
| Hexadecan | 131,2 |
| Butylacrylat | 7216 |
| MMA | 7872 |
| Butylmethacrylat | 2296 |
| Methacrylsäure | 360,8 |
| Natriumdodecylsulfat | 492 |
| lineares, Monomethacrylatomethyl-funktionelles | |
| PDMS (zahlenmittlere Molmasse: 1200 g/mol) | 918,4 |
| Partikel 1 | 918,4 |
| destilliertes Wasser | 9840 |

### Polymer 3:

Die Herstellung von Polymer 3 erfolgte entsprechend Beispiel 1, mit dem Unterschied, dass die "Dosierung 1" folgende Zusammensetzung hatte:

| | |
|---|---|
| Dosierung 1 (alle Angaben in Gramm): | |
| Hexadecan | 131,2 |
| Butylacrylat | 7216 |
| MMA | 6560 |
| Butylmethacrylat | 2296 |
| Styrol | 1312 |
| Methacrylsäure | 360,8 |
| Natriumdodecylsulfat | 492 |
| Partikel 1 | 1837 |
| destilliertes Wasser | 9840 |

### Polymer 4:

Die Herstellung von Polymer 4 erfolgte entsprechend Beispiel 1, mit dem Unterschied, dass die "Dosierung 1" folgende Zusammensetzung hatte:

| | |
|---|---|
| Dosierung 1 (alle Angaben in Gramm): | |
| Hexadecan | 131,2 |
| Butylacrylat | 7216 |
| MMA | 6560 |
| Butylmethacrylat | 2296 |
| Styrol | 1312 |
| Methacrylsäure | 360,8 |
| Natriumdodecylsulfat | 492 |
| lineares Monomethacrylfunktionelles PDMS mit | |
| zahlenmittlerer Molmasse von ca. 1200 g/mol | 1837 |
| destilliertes Wasser | 9840 |

Sämtliche Polymere wurden in Form von Dispersionen mit Festgehalten FG von ca. 50 Gew-%, volumenmittleren Teilchengrößen von ca. 90 nm und pH-Werten von 8,0 erhalten.

### Herstellung der Beschichtungsmittel:

Das jeweilige Beschichtungsmittel wurde hergestellt, indem die in der Tabelle 1 aufgelisteten Komponenten entsprechend der Nummerierung nacheinander zugegeben und mit einem gängigen, schnelllaufenden Rührwerk (Dissolver der Firma Getzmann) gründlich durchmischt wurden.

**Tabelle 1: Rezeptur für die Beschichtungsmittel:**

| Nr. | Rohstoffe | Gew.-T | Funktion | Hersteller |
|---|---|---|---|---|
| 1 | Wasser | 146,5 | | |
| 2 | Lopon 890 | 1,0 | Dispergiermittel | BK Giulini Chemie |
| 3 | Calgon N | 1,0 | Netz-/Dispergiermittel | BK Giulini Chemie |
| 4 | Acticide MBS | 1,0 | Topfkonservierer | Thor-Chemie |
| 5 | Acticide MKA | 5,0 | Filmkonservierer | Thor-Chemie |
| 6 | Walocell XM 20000 PV | 1,5 | Verdicker | Wolff Walsrode |
| 7 | SILFOAM SD 860 | 1,5 | Entschäumer | Wacker Chemie |
| 8 | Lusolvan FBH | 5,0 | Filmbildehilfsmittel | BASF |
| 9 | Kronos 2190 | 60,0 | Weißpigment | Kronos Titan |
| 10 | Omyacarb 5 GU | 107,5 | nodularer Füllstoff | Omya |
| 11 | Plastorit 000 | 40,0 | nodularer Füllstoff | Luzenac |
| 12 | Steopac | 20,0 | lamellarer Füllstoff | Luzenac |
| 13 | OpTiMat 2550 | 6,0 | mattierender Füllstoff | World Minerals |
| 14 | ggf. Polymer | 100,0 | Bindemittel | |
| 15 | Natronlauge,10%ig | 0,5 | pH-Einstellung | |
| 16 | Tafigel PUR 40 | 1,0 | Rheologieadditiv | Münzing-Chemie |

### Anwendungstechnische Ausprüfung der Beschichtungsmittel

In den folgenden (Vergleichs)beispielen ((V)Bsp.) beziehen sich alle Angaben von Gewichtsteilen (Gew.-T) bzw. Gewichtsprozent (Gew.-%) auf das Gesamtgewicht der jeweiligen Zusammensetzung, sofern nichts anderes angegeben.

Die Herstellung des jeweiligen Prüfkörpers erfolgte nach DIN EN 1062-3, indem das jeweilige Beschichtungsmittel (Tabelle 1) mittels eines Pinsels in einer Auftragsdicke von 200 g/m² auf Kalksandstein aufgetragen wurde und der so beschichtete Kalksandstein für 1 Woche bei Raumtemperatur getrocknet und danach für 24 h im Normklima (23°C ± 2°C, 50 % ± 5 % relative Luftfeuchte) gelagert wurde.

Die Wasserdurchlässigkeit des jeweiligen Prüfkörpers erfolgte gemäß DIN EN 1062-3 (Bestimmung der Wasserdurchlässigkeit von Beschichtungen, Februar 1999). Der unbeschichtete Kalksandstein wies einen Wasseraufnahmekoeffizienten nach 24 h Wasserlagerung w₂₄ von 6,19 kg/(m²h^{0,5}) auf. Die so erhaltenen Werte für die Wasserdurchlässigkeit sind in Tabelle 2 aufgeführt.

Die Wasserdampfdurchlässigkeit wurde gemäß ISO 7783-2 am jeweiligen Prüfkörper bestimmt (siehe Tabelle 2).

Die Bestimmung der Wasseraufnahme des jeweiligen Prüfkörpers erfolgte nach DIN EN 1062-3, mit dem Unterschied, dass der Prüfkörper nicht 3 Mal je 24 Stunden in frischem Leitungswasser gelagert und danach jeweils getrocknet wurde, sondern 72 Stunden durchgehend in Wasser gelagert und anschließend für 24 Stunden bei 50°C ± 5°C getrocknet wurde. Die so erhaltenen Wasseraufnahmewerte sind in Tabelle 2 aufgeführt.

Zur Bewertung der Oberflächenhydrophobie wurde der Abperleffekt bestimmt (Tabelle 2). Dazu wurde auf den jeweiligen, horizontal gelagerten Prüfkörper ein Wassertropfen aufgebracht. Es wurde beobachtet, ob dieser Wassertropfen abperlt, auf der Oberfläche stehen bleibt, spreitet oder eindringt.

Bewertet wurde der Abperleffekt anhand eines Schulnotensystems mit folgenden Beurteilungskriterien:
1 = sehr guter Abperleffekt - Untergrund benetzt nicht, Wasser perlt vollkommen ab, kein Tropfen bleibt hängen
2 = guter Abperleffekt - einzelne Wassertropfen bleiben hängen, kein Spreiten von Wasser
3 = mäßiger Abperleffekt - Untergrund teilweise benetzt
4 = schlechter Abperleffekt - Untergrund benetzt
5 = kein Abperleffekt - Untergrund wird benetzt und durch aufsaugendes Wasser dunkel verfärbt.

Zur Bestimmung der Transparenz wurde vom jeweiligen Polymer mit eine wässrige Dispersion mit einem Feststoffgehalt FG von 50 Gew.-% hergestellt. Die jeweilige Dispersion wurde unter Verwendung eines Kastenrakels mit einer Spaltbreite von 100 Mikrometer ein Film gezogen und 24 h bei Raumtemperatur getrocknet. In Anlehnung an die DIN50014 wurde anschließend der Film durch Sichtprüfung anhand einer Skala von 1 bis 10 bewertet, wobei 1 einem komplett transparenten und 10 einem intransparenten Film entsprechen.

**Tabelle 2: Ergebnisse der Ausprüfung der Beschichtungsmittel der Zusammensetzung entsprechend Tabelle 1:**

| | Polymer | Wasserauf'-nahmewert [kg/ (m²h^{0,5})] | Wasserdampfdurchlässigkeit [m] | Abperleffekt | Transparenz |
|---|---|---|---|---|---|
| VBsp. 3 | - | 6,19 | - | 5 | - |
| Bsp. 4 | Polymer 1 | 0,11 | 0,10 | 4-5 | 3 |
| Bsp. 5 | Polymer 2 | 0,11 | 0,10 | 4-5 | 3 |
| VBsp. 6 | Polymer 3 | 0,09 | 0,16 | 3 | 6 |
| VBsp. 7 | Polymer 4 | 0,25 | 0,10 | 2 | 7 |
| VBsp. 8 | Silikon-harzfarbe^{a)} | 0,10 | 0,05 | 1 | - |

| | | | | | |
|---|---|---|---|---|---|
| a) Die Silikonharzfarbe hatte eine Zusammensetzung entsprechend Tabelle 1, wobei als Bindemittel eine Silikonharzemulsion eines Methylsilikonharzes (Molekulargewicht Mw von 6000 g/mol; alle direkt am Silizium gebundenen Kohlenwasserstoffreste sind Methylreste; das Methylsilikonharz trägt 0,4% Hydroxy- und 3,7% Ethoxy-Gruppen, bezogen auf die Gesamtmasse des Partikels) und ein silikonhaltiges Frühhydrophobieradditiv (wässrige Emulsion (FG = 55%) eines Kondensationsproduktes aus α,ω-Bishydroxy-Polydimethylsiloxanen und N-(2-Aminoethyl)3-Aminopropyltrimethoxysilan in Gegenwart von KOH. Das silikonhaltige Frühhydrophobieradditiv hat eine Aminzahl von etwa 0,3, eine Viskosität von etwa 1500 mm²/s bei 25°C und einen Restmethoxygehalt von weniger als 5 mol-% bezogen auf die Anfangs im N-(2-Aminoethyl)3-aminopropyltrimethoxysilan vorhandenen Methoxygruppen.) sowie FLEXCRYL SAF 34 (Dispersionsbindemittel) der Wacker Polymer Systems enthielt. | | | | | |

Die Beschichtung enthaltend eine Standardsilikonharzfarbe (Tabelle 2: Vergleichsbeispiel 8) weist eine sehr geringe Wasserdampfdurchlässigkeit und einen niedrigen Wasseraufnahmewert auf und zeigt einen stark ausgeprägten Abperleffekt, was bei entsprechendem Einsatz der Beschichtung in Außenfassaden zu den eingangs beschriebenen Problemen führt. Auch die Beschichtungen der Vergleichsbeispiele 6 bzw. 7 (Polymer 3 bzw. 4) zeigen einen ausgeprägen Abperleffekt. Nur die erfindungsgemäßen Beispiele 4 bzw. 5 enthaltend die erfindungsgemäßen Silikonorganocopolymere zeigen eine gute Wasseraufnahme und Wasserdampfdurchlässigkeit und sind zugleich so oberflächenhydrophil, dass ein Wassertropfen auf der Oberfläche spreitet und nicht abperlt. Außerdem sind die erfindungsgemäßen Silikonorganocopolymere (Polymer 1 bzw. 2) transparenter als die in den Vergleichsbeispielen 6 bzw. 7 eingesetzten Polymere 3 bzw. 4.

## Patentansprüche

1. Nanopartikuläre Silikonorganocopolymere in Form von deren wässrigen Polymerdispersionen oder in Wasser redispergierbaren Polymerpulvern, erhältlich mittels radikalisch initiierter Polymerisation in wässrigem Medium, und gegebenenfalls anschließender Trocknung der dabei erhaltenen Polymerdispersion, von
A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von
B) mindestens einem Partikel P mit einem mittleren Durchmesser von ≤ 1000 nm, welches mit ethylenisch ungesättigten, radikalisch polymerisierbaren Gruppen funktionalsiert ist, wobei
B1) als Partikel P ein oder mehrere aus der Gruppe der Metalloxide und Halbmetalloxide eingesetzt werden, und/oder B2) als Partikel P Silikonharze der allgemeinen Formel [R⁴_{(p+z)}SiO_{(4-p-z)/2}]ₘ (II) eingesetzt werden, wobei die einzelnen Reste R⁴ jeweils unabhängig voneinander für Wasserstoff-, Hydroxy-, sowie Alkyl-, Cycloalkyl-, Aryl-, Alkoxy- oder Aryloxyreste mit jeweils bis zu 18 C-Atomen stehen, welche gegebenenfalls substituiert sein können,
wobei m für eine ganzzahlige Zahl ≥ 30 steht, und
wobei für mindestens 20 Mol-% des jeweiligen Silikonharzes p + z = 0, 1 oder 3 beträgt, **dadurch gekennzeichnet, dass** C) ein oder mehrere lineare Polydiorganosiloxane der allgemeinen Formel R⁹₃SiO-[R⁸₂SiO_{2/2}]ₙ-SiR⁹₃ (III) copolymerisiert werden,
wobei die einzelnen Reste R⁸ und R⁹ jeweils unabhängig voneinander für Hydroxy-, Alkyl-, Cycloalkyl-, Aryl-, Alkoxy- oder Aryloxyreste mit jeweils bis zu 18 C-Atomen stehen, welche gegebenenfalls substituiert sein können,
wobei mindestens einer der Reste R⁹ für einen Hydroxy-, Alkoxy- oder Aryloxyrest steht, und
n eine ganzzahlige Zahl ≤ 100 bedeutet, und
wobei B1), B2) und C) jeweils mit einem oder mehreren α-Organosilanen der allgemeinen Formel (R¹O)₃₋ₖ(R²)ₖSi-(CR³₂)-X (I) funktionalisiert werden,
wobei R¹ für Wasserstoff, einen Alkylrest mit 1 bis 6 Kohlenstoffatomen oder einen Arylrest steht, R² und R³ jeweils unabhängig voneinander für Wasserstoff, einen Alkylrest mit 1 bis 12 Kohlenstoffatomen oder einen Arylrest stehen, k die Werte 0, 1 oder 2 bedeuten kann, und X ein Acryl- oder Methacrylrest
ist.

2. Nanopartikuläre Silikonorganocopolymere nach Anspruch 1, **dadurch gekennzeichnet, dass** die Reste R⁸ der linearen Polydiorganosiloxane C) für Methyl, Phenyl oder Wasserstoff stehen.

3. Nanopartikuläre Silikonorganocopolymere nach Anspruch 1 oder 2, **dadurch gekennzeichnet, dass** die Reste R⁹ der linearen Polydiorganosiloxane C) ausgewählt werden aus der Gruppe umfassend Methyl, Phenyl, Wasserstoff, Methyloxy, Phenyloxy oder Hydroxy.

4. Nanopartikuläre Silikonorganocopolymere nach Anspruch 1 bis 3, **dadurch gekennzeichnet, dass** als Partikel P aus der Gruppe B1) Siliziumoxide oder Oxide der Metalle Aluminium, Titan, Zirkonium, Tantal, Wolfram, Hafnium, Zink oder Zinn eingesetzt werden.

5. Nanopartikuläre Silikonorganocopolymere nach Anspruch 1 bis 3, **dadurch gekennzeichnet, dass** Partikel P aus der Gruppe B2) Silikonharze der allgemeinen Formel [R⁴_{(p+z)}SiO_{(4- p-z)/2}]ₘ (II) eingesetzt werden, die aus einer beliebigen Kombination von M-Einheiten (R₃SiO-), D-Einheiten (-OSiR₂O-), T-Einheiten (RSiO₃³⁻) und Q-Einheiten (SiO₄⁴⁻) bestehen, mit der Maßgabe, dass stets T- und/oder Q-Einheiten enthalten sind und ihr Anteil an den Einheiten, die das Silikonharz aufbauen, in Summe mindestens 20 Mol-% beträgt und bei Vorlage jeweils nur einer dieser Einheiten ihr Anteil jeweils mindestens 20 Mol-% ist.

6. Nanopartikuläre Silikonorganocopolymere nach Anspruch 1 bis 5, **dadurch gekennzeichnet, dass** das α-Organosilan der Formel (R¹O)₃₋ₖ(R²)ₖSi-(CR³₂)-X (I) als Reste R¹ und R² unsubstituierte Alkylgruppen mit 1 bis 6 C-Atomen und als Rest R³ Wasserstoff
enthält.

7. Nanopartikuläre Silikonorganocopolymere nach Anspruch 1 bis 6, **dadurch gekennzeichnet, dass** der mittlere Durchmesser der Partikeldomänen der nanopartikulären Silikonorganocopolymere 1 nm bis 1000 nm beträgt.

8. Verfahren zur Herstellung der nanopartikulären Silikonorganocopolymere nach Anspruch 1 bis 7, mittels Suspensions-, Emulsions- oder Miniemulsionspolymerisation.

9. Beschichtungsmittel enthaltend ein oder mehrere nanopartikuläre Silikonorganocopolymere nach Anspruch 1 bis 7 sowie gegebenenfalls ein oder mehrere Hilfsstoffe und gegebenenfalls ein oder mehrere Zusatzstoffe.

10. Verwendung der Beschichtungsmittel nach Anspruch 9 als Farben.

11. Wärmedämmverbundsysteme (WDVS) enthaltend Dämmmaterial und eine oder mehrere Beschichtungen, **dadurch gekennzeichnet, dass** zur Herstellung mindestens einer der Beschichtungen ein Beschichtungsmittel enthaltend ein oder mehrere nanopartikuläre Silikonorganocopolymere nach Anspruch 1 bis 7 eingesetzt wurde.

12. Verwendung der nanopartikulären Silikonorganocopolymere nach Anspruch 1 bis 7, zur Herstellung von Beschichtungsstoffen und Imprägnierungen und zur Herstellung von Textilien, Teppichen, Bodenbelägen, oder sonstigen aus Fasern herstellbaren Gütern, Leder, Kunststoffe wie Folien, Formteilen.

13. Verwendung der nanopartikulären Silikonorganocopolymere nach Anspruch 1 bis 7, zur Einarbeitung in Elastomermassen.

## Claims

1. Nanoparticulate silicone organocopolymers in the form of their aqueous polymer dispersions or water-redispersible polymer powders, obtainable by means of free-radical initiated polymerization in an aqueous medium and, if desired, subsequent drying of the resultant polymer dispersion, of
A) one or more monomers from the group consisting of vinyl esters, (meth)acrylic esters, vinylaromatics, olefins, 1,3-dienes, vinyl ethers and vinyl halides and, if desired, further monomers copolymerizable therewith, in the presence of
B) at least one particle P having an average diameter of ≤ 1000 nm, which is functionalized with ethylenically unsaturated, free-radically polymerizable groups, where
B1) particles P used are one or more from the group of metal oxides and semimetal oxides, and/or B2) particles P used are silicone resins of the general formula [R⁴_{(p+z)}SiO_{(4-p-z)/2}]ₘ (II), the individual radicals R⁴ each independently of one another being hydrogen, hydroxyl, and also alkyl, cycloalkyl, aryl, alkoxy or aryloxy radicals having in each case up to 18 C atoms, which may optionally be substituted,
m being an integral number ≥ 30, and
where, for at least 20 mol% of the respective silicone resin, p + z = 0, 1 or 3, **characterized in that**
C) one or more linear polydiorganosiloxanes of the general formula R⁹₃SiO-[R⁸₂SiO_{2/2}]-SiR⁹₃ (III) are copolymerized,
where the individual radicals R⁸ and R⁹ each independently of one another are hydroxyl, alkyl, cycloalkyl, aryl, alkoxy or aryloxy radicals having in each case up to 18 C atoms,
which may optionally be substituted,
where at least one of the radicals R⁹ is a hydroxyl, alkoxy or aryloxy radical, and
n is an integral number ≤ 100, and
where B1), B2) and C) are each functionalized with one or more α-organosilanes of the general formula (R¹O)₃₋ₖ(R²)ₖSi-(CR³₂)-X (I),
where R¹ is hydrogen, an alkyl radical having 1 to 6 carbon atoms or an aryl radical, R² and R³ each independently of one another are hydrogen, an alkyl radical having 1 to 12 carbon atoms or an aryl radical, k may denote the values 0, 1 or 2, and X is an acryloyl or methacryloyl radical.

2. Nanoparticulate silicone organocopolymers according to Claim 1, **characterized in that** the radicals R⁸ of the linear polydiorganosiloxanes C) are methyl, phenyl or hydrogen.

3. Nanoparticulate silicone organocopolymers according to Claim 1 or 2, **characterized in that** the radicals R⁹ of the linear polydiorganosiloxanes C) are selected from the group consisting of methyl, phenyl, hydrogen, methyloxy, phenyloxy, and hydroxyl.

4. Nanoparticulate silicone organocopolymers according to Claim 1 to 3, **characterized in that** particles P used are from the group B1) of silicon oxides or oxides of the metals aluminum, titanium, zirconium, tantalum, tungsten, hafnium, zinc or tin.

5. Nanoparticulate silicone organocopolymers according to Claim 1 to 3, **characterized in that** particles P used are from the group B2) of silicone resins of the general formula [R⁴_{(p+z)}SiO_{(4- p-z)/2}]ₘ (II), which are composed of any desired combination of M units (R₃SiO-), D units (-OSiR₂O-), T units (RSiO₃³⁻) and Q units (SiO₄⁴⁻), with the proviso that T units and/or Q units are always present and that their fraction as a proportion of the units of which the silicone resin is composed totals at least 20 mol% and, where only one of these units is present, its fraction is at least 20 mol% in each case.

6. Nanoparticulate silicone organocopolymers according to Claim 1 to 5, **characterized in that** the α-organosilane of the formula (R¹O)₃₋ₖ(R²)ₖSi-(CR³₂)-X (I) contains unsubstituted alkyl groups having 1 to 6 C atoms as radicals R¹ and R² and hydrogen as radical R³.

7. Nanoparticulate silicone organocopolymers according to Claim 1 to 6, **characterized in that** the average diameter of the particle domains of the nanoparticulate silicone organocopolymers is 1 nm to 1000 nm.

8. Processes for preparing the nanoparticulate silicone organocopolymers according to Claim 1 to 7, by means of suspension polymerization, emulsion polymerization or miniemulsion polymerization.

9. Coating compositions comprising one or more nanoparticulate silicone organocopolymers according to Claim 1 to 7 and also, if desired, one or more auxiliaries and, if desired, one or more additives.

10. Use of the coating compositions according to Claim 9 as paints.

11. Thermal insulation composite systems (TICS) comprising insulating material and one or more coatings, **characterized in that** at least one of the coatings has been produced using a coating composition comprising one or more nanoparticulate silicone organocopolymers according to Claim 1 to 7.

12. Use of the nanoparticulate silicone organocopolymers according to Claim 1 to 7 for preparing coating materials and impregnating systems and for producing textiles, carpets, floor coverings, or other goods which can be produced from fibers, leather, plastics such as films, and moldings.

13. Use of the nanoparticulate silicone organocopolymers according to Claim 1 to 7 for incorporation into elastomer compounds.

## Revendications

1. Copolymères organosilicone nanoparticulaires sous forme de leurs dispersions de polymère aqueuses ou de poudres de polymères redispersables dans l'eau, pouvant être obtenus par polymérisation à amorçage radicalaire, en milieu aqueux, et éventuellement séchage subséquent de la dispersion de polymère ainsi obtenue, de
A) un ou plusieurs monomères choisis dans le groupe comprenant des esters vinyliques, des esters d'acide (méth)acrylique, des composés vinylaromatiques, des oléfines, des 1,3-diènes, des éthers vinyliques et des halogénures de vinyle et éventuellement d'autres monomères copolymérisables avec ceux-ci, en présence de
B) au moins une particule P ayant un diamètre moyen ≤ 1 000 nm, qui est fonctionnalisée avec des groupes à insaturation éthylénique, aptes à la polymérisation radicalaire,
B1) une ou plusieurs particules choisies dans le groupe des oxydes métalliques et des oxydes de métalloïdes étant utilisée(s) en tant que particule(s) P et/ou B2) des résines de silicone de formule générale [R⁴_{(p+z)}SiO_{(4-p-z)/2}]ₘ (II) étant utilisées en tant que particules P, les radicaux R⁴ individuels représentant chacun indépendamment les uns des autres un atome d'hydrogène, des radicaux hydroxy ainsi qu'alkyle, cycloalkyle, aryle, alcoxy ou aryloxy ayant chacun jusqu'à 18 atomes de carbone, qui peuvent éventuellement être substitués,
m représentant un nombre entier ≥ 30, et
pour au moins 20 % en moles de la résine de silicone respective, p + z valant 0, 1 ou 3, **caractérisés en ce que**
C) on copolymérise un ou plusieurs polydiorganosiloxanes linéaires de formule générale R⁹₃SiO-[R⁸₂SiO_{2/2}]ₙ-SiR⁹₃ (III),
les radicaux individuels R⁸ et R⁹ représentant chacun, indépendamment l'un de l'autre, des radicaux hydroxy, alkyle, cycloalkyle, aryle, alcoxy ou aryloxy ayant chacun jusqu'à 18 atomes de carbone, qui peuvent éventuellement être substitués,
au moins l'un des radicaux R⁹ représentant un radical hydroxy, alcoxy ou aryloxy, et
n représentant un nombre entier ≤ 100, et
B1), B2) et C) étant fonctionnalisés chacun avec un ou plusieurs α-organosilanes de formule générale (R¹O)₃₋ₖ(R²)ₖSi-(CR³₂)-X (I),
R¹ représentant un atome d'hydrogène, un radical alkyle ayant de 1 à 6 atomes de carbone ou un radical aryle, R² et R³ représentant chacun, indépendamment l'un de l'autre, un atome d'hydrogène, un radical alkyle ayant de 1 à 12 atomes de carbone ou un radical aryle, k pouvant représenter les valeurs 0, 1 ou 2, et X étant un radical acryloyle ou méthacryloyle.

2. Copolymères organosilicone nanoparticulaires selon la revendication 1, **caractérisés en ce que** les radicaux R⁸ des polydiorganosiloxanes linéaires C) représentent les groupes méthyle, phényle ou un atome d'hydrogène.

3. Copolymères organosilicone nanoparticulaires selon la revendication 1 ou 2, **caractérisés en ce que** les radicaux R⁹ des polydiorganosiloxanes linéaires C) sont choisis dans l'ensemble comprenant un atome d'hydrogène, les groupes méthyle, phényle, méthyloxy, phényloxy ou hydroxy.

4. Copolymères organosilicone nanoparticulaires selon les revendications 1 à 3, **caractérisés en ce qu'**on utilise comme particules P choisies dans le groupe B1) des oxydes de silicium ou des oxydes des métaux aluminium, titane, zirconium, tantale, tungstène, hafnium, zinc ou étain.

5. Copolymères organosilicone nanoparticulaires selon les revendications 1 à 3, **caractérisés en ce qu'**on utilise des particules P du groupe B2) des résines de silicone de formule générale [R⁴_{(p+z)}SiO_{(4-p- z)/2}]ₘ (II), qui consistent en une combinaison quelconque d'unités M (R₃SiO-), d'unités D (-OSiR₂O-), d'unités T (RSiO₃³⁻) et d'unités Q (SiO₄⁴⁻), étant entendu que des unités T et/ou Q sont toujours contenues et que leur teneur en les unités qui constituent la résine de silicone représente au total au moins 20 % en moles et lorsqu'une seule de ces unités est présente, sa proportion est chaque fois d'au moins 20 % en moles.

6. Copolymères organosilicone nanoparticulaires selon les revendications 1 à 5, **caractérisés en ce que** l'α-organosilane de formule (R¹O)₃₋ₖ(R²)ₖSi-(CR³₂)-X (I) contient en tant que radicaux R¹ et R² des groupes alkyle non substitués ayant de 1 à 6 atomes de carbone et en tant que radical R³ un atome d'hydrogène.

7. Copolymères organosilicone nanoparticulaires selon les revendications 1 à 6, **caractérisés en ce que** le diamètre moyen des domaines particulaires des copolymères organosilicone nanoparticulaires vaut de 1 nm à 1 000 nm.

8. Procédé pour la préparation des copolymères organosilicone nanoparticulaires selon les revendications 1 à 7, par polymérisation en suspension, émulsion ou miniémulsion.

9. Composition de revêtement contenant un ou plusieurs copolymères organosilicone nanoparticulaires selon les revendications 1 à 7 ainsi qu'éventuellement un ou plusieurs adjuvants et éventuellement un ou plusieurs additifs.

10. Utilisation des compositions de revêtement selon la revendication 9 en tant que peintures.

11. Systèmes composites d'isolation thermique (SCIT) contenant un matériau isolant et un ou plusieurs revêtements, **caractérisés en ce que** pour la production d'au moins l'un des revêtements on a utilisé une composition de revêtement contenant un ou plusieurs copolymères organosilicone nanoparticulaires selon les revendications 1 à 7.

12. Utilisation des copolymères organosilicone nanoparticulaires selon les revendications 1 à 7, pour la production d'imprégnations et de matières de revêtement et pour la fabrication de textiles, de tapis, de revêtements de sol ou d'autres articles pouvant être fabriqués à partir de fibres, de cuir, de matières plastiques telles que des films, des pièces moulées.

13. Utilisation des copolymères organosilicone nanoparticulaires selon les revendications 1 à 7, pour l'incorporation dans des matières élastomères.
